(19) Europäisches Patentamt / European Patent Office / Office européen des brevets

(11) **EP 4 268 052 B1**

(12) **EUROPEAN PATENT SPECIFICATION**

(45) Date of publication and mention
of the grant of the patent:
**03.09.2025 Bulletin 2025/36**

(21) Application number: **20839314.0**

(22) Date of filing: **22.12.2020**

(51) International Patent Classification (IPC):
$G06F\ 3/01$ (2006.01)   $G06F\ 3/0481$ (2022.01)
$G06T\ 19/00$ (2011.01)   $G06F\ 3/04815$ (2022.01)
$G06T\ 17/00$ (2006.01)

(52) Cooperative Patent Classification (CPC):
**G06F 3/011; G06F 3/04815; G06T 17/00;
G06T 19/003;** G06T 2219/004

(86) International application number:
**PCT/EP2020/087575**

(87) International publication number:
**WO 2022/135685 (30.06.2022 Gazette 2022/26)**

(54) **METHOD AND COMMUNICATION DEVICE FOR POSITIONING ESTIMATION**

VERFAHREN UND KOMMUNIKATIONSVORRICHTUNG ZUR POSITIONSSCHÄTZUNG

PROCÉDÉ ET DISPOSITIF DE COMMUNICATION POUR L'ESTIMATION DE POSITIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.11.2023 Bulletin 2023/44**

(73) Proprietor: **Telefonaktiebolaget LM Ericsson
(publ)
164 83 Stockholm (SE)**

(72) Inventors:
• **TORRES, Florent
21139 STOCKHOLM (SE)**
• **HUNT, Alexander
218 72 TYGELSJÖ (SE)**

• **SHARMA, Sunny
216 47 LIMHAMN (SE)**
• **DAHLGREN, Fredrik
224 65 LUND (SE)**
• **ZOU, Gang
226 49 LUND (SE)**

(74) Representative: **Ericsson
Patent Development
Torshamnsgatan 21-23
164 80 Stockholm (SE)**

(56) References cited:
WO-A1-2020/203831     US-A1- 2015 094 142
US-A1- 2016 025 982     US-A1- 2019 043 259
US-A1- 2019 340 909     US-A1- 2020 143 599

**Description**

Technical Field

A method for enabling execution of a virtual activity in a physical environment and a communication device on which the method can be executed.

Background

Virtual reality has been around for several years and applications, such as the ones built on the papers VRoamer: Generating On-The-Fly VR Experiences While Walking inside Large, Unknown Real-World Building Environments, VR 2019, IEEE and DreamWalker: Substituting Real-World Walking Experiences with a Virtual Reality, User Interface Software and Technology (UIST) 2019, ACM, might soon be a reality in Virtual Reality (VR) products available for everyone. This type of technology will enable VR applications and their users to share the open environment, making the VR not to be constraint only to certain spaces. Here the VR application calculates where there are obstacles on the fly and either show an obstacle as is or change it to a virtual object, so that the user will not accidently bump into it, without being aware of it. These obstacles can be either stationary or moving obstacles.

Deficiencies from applying any of the technical solutions, presented in any of the references mentioned above are however that you can still walk into an obstacle, appearing as a physical object that is not part of e.g. a gaming scene without being aware of it. Some obstacles may be acceptable in a gaming environment in which a user is roaming, e.g. if a physical object is a soft object and the relative speed between the user and the physical object is very low. In some situations, even a hard, physical object can be acceptable if the relative speed is very low, such as e.g. when a user slowly walks into a wall. However, there are risks for physical harm or even severe damages if physical objects are e.g. fastmoving objects, such as e.g. a bike or a moving car.

Furthermore, if an obstacle is a large hole in the ground, or if a significant height difference, caused by e.g. a cliff or stairways, appear in the environment, it is imperative that a user is aware of the risk of roaming in that environment when attention is on an executed VR application. Finally, there is also the risk that the system does not correctly spot obstacles or fail in providing a sufficiently accurate position to the user and/or the application, or that an obstacle is indeed detected but there is no efficient way of making a user aware of the detected obstacle in a sufficiently fast way, at the same time as having a minimal impact on the actual VR activity and the user experience.

US9501919 discloses a technical solution where cameras monitor a geographical area and detects the position of a user, where that user's position and movements are shown on a 3D map, presented to the user together with an avatar, representing the user being monitored on a remote screen. Risk zones are defined, and a warning is provided when the person/avatar is located in such a zone. This system is however dependent on a complete system of remotely located area sensors, and the zone risk definition is static, which means that it can only be used in a fully adapted and predictable environment, with predefined, static obstacles.

US 2019/340909 A1 discloses an industrial visualization system, which is capable of defining and enforcing a virtual safety shield, comprising a three-dimensional space, surrounding a wearer of a client device.

US 2020/143599 A1 discloses a technology that can provide improved safety by detecting unsafe conditions confronting a user of a wearable (or portable) sensor configured to capture motion and/or determining the path of an object based on imaging, acoustic or vibrational waves.

US 2015/094142 A1 discloses methods for warning a user of a head mounted display (HMD) during gameplay of a video game. Upon detecting a change in position of the HMD exceeding a pre-defined threshold value rendering of interactive scenes of the HMD are interrupted and a warning is presented to the user of the HMD.

US 2019/043259 A1 discloses a method for depth sensor aided estimation of virtual reality environment boundaries including generating depth data at a depth sensor of an electronic device based on a local environment proximate the electronic device.

Further examples of the relevant prior art include documents WO 2020/203831 A1 and US 2016/025982 A1.

For at least the reasons mentioned above it is a desire to make a user of a VR application aware of obstacles that can appear as a potential hazard to the user, when the user is executing the VR application in a dynamic, unpredictable environment, as well as to provide such awareness with a minimum of impact on the VR activity.

Summary

It is an aim of the present disclosure to provide a method and a communication device which, to at least some extent, address one or more of the issues mentioned above.

According to one aspect, a method for enabling execution of a virtual activity in a physical environment is suggested, wherein development of the virtual activity is presented to a user via at least one user interface of a communication device. The suggested method comprise determining of a trajectory of the communication device and capturing and consolidating of sensor data associated with the physical environment and virtual data associated with the virtual activity. The suggested method also comprise generating at least two mutually dependent zones in the physical environment, based on the captured and consolidated data and the trajectory of the communication device, and presenting an updated scene of the virtual activity, comprising at least parts of the zones via at least one of the user interfaces of the communication device.

According to another aspect, a communication device for enabling execution of a virtual activity in a physical environment is suggested, wherein development of the virtual activity is presented to a user via at least one user interface of the communication device. The communication device comprise a memory and computer readable instructions, which when executed by a processor of the communication device, causes the communication device to: determine a trajectory of the communication device; capture and consolidate sensor data associated with the physical environment and virtual data associated with the virtual activity; generate at least two mutually dependent zones in the physical environment based on the captured and consolidated data and the trajectory of the communication device, and present an updated scene of the virtual activity, comprising at least parts of the zones via at least one of the user interfaces of the communication device.

According to yet another aspect, a communication device for enabling execution of a virtual activity in a physical environment is suggested, wherein development of the virtual activity is presented to a user via at least one user interface of the communication device. The communication device comprise a determining function for determining a trajectory of the communication device; a capturing and consolidating function for capturing and consolidating sensor data associated with the physical environment and virtual data associated with the virtual activity; a generating function for generating at least two mutually dependent zones in the physical environment based on the captured and consolidated data and the trajectory of the communication device, and a presenting function for presenting an updated scene of the virtual activity, comprising at least parts of the zones via at least one of the user interfaces of the communication device.

Brief Description of the Drawings

For a better understanding of examples of the present disclosure, and to show more clearly how the examples may be carried into effect, reference will now be made, by way of example only, to the following drawings in which:

Fig. 1 is an illustration of scenario, where two players are involved in playing a game in an outdoor environment.

Fig. 2 is an illustration of an example view as seen by of one of the persons of Fig. 1, when applying a method as described herein.

Fig. 3 is a flow chart illustrating a method for handling environmental data when a user is using a VR based application.

Fig. 4 is another flow chart, illustrating a method for generating and updating zones when a user is using a VR based application.

Fig. 5 is yet another flow chart, illustrating parts of the method according to Fig. 4 in further detail when a user is using a VR based application.

Fig. 6a-c are exemplifying illustrations of various zones, according to some embodiments.

Fig. 7 is illustrating an example of a trajectory cone, enabling generation and updating of any of the zones, as illustrated in any of Fig. 6a-c.

Fig. 8a is an example of an arrangement, capable of handling zones according to one embodiment.

Fig. 8b is an example of an arrangement, capable of handling zones according to another embodiment.

Fig. 9a is a block scheme, illustrating a communication device, capable of executing a method as disclosed herein, according to one embodiment.

Fig. 9b is another block scheme, illustrating a communication device, capable of executing a method as disclosed herein, according to another embodiment.

Detailed Description

The present document refers to situations where a user is engaged in execution of a VR or XR (Extended Reality) experience, or any other type of virtual experience or activity where the user is wearing and using an electronic communication equipment or wearable, in a potentially hazardous environment, where the user, at the same time is prohibited from having full control of whereabouts outside of the control of the virtual activity in the physical environment. Although the abbreviations VR or XR are used throughout this document in order to express a virtual experience, it is to be understood that the described virtual experience is not to be limited to only VR or XR experiences, but to any type of virtual experience where the users attention to the physical world in which the user is moving, when executing a virtual experience, is limited, while the users focus, to the largest possible extent, is drawn to the virtual experience, provided by an application, such as e.g. a virtual game.

The mentioned virtual experiences typically refers to various types of single- or multi-player gaming, but may alternatively refer to executions of simulations or applications adapted to provide assistance in e.g. rescue or training missions, executed by fire fighters, maintenance tasks, executed by maintenance personal, typically in a potential hazardous environment, or any other activity, where obstacles in a physical environment may appear as hazardous obstacles at certain situations, which may require a user's attention drawn from the virtual experience to the real world from time to time. By applying the suggested method, a user, will be provided with better options of completing a virtual task in an efficient way at a minimal level of distraction, as well as at a minimal risk level.

An obstacle is here to be construed as a physical obstacle, which may be static, such as e.g. a wall of a building, a water fountain, stairs, a rock, vegetation or fences, or mobile, such as e.g. vehicles, including e.g. bikes, cars or gardening machines. In addition to physical objects, an identified obstacle may be some kind of identifiable, potentially hazardous appearance in the environment, such as e.g. a hole or a ditch in the ground. More specifically, an obstacle, which can be construed as a potential hazardous obstacle, is to be construed as having any type of appearance to a user which is identifiable by processing of available sensor input. An identifiable obstacle will herein be referred to as a potential hazardous obstacle, if so determined by the relevant application, based on data, available to the application.

In order to provide a safer experience for a user of a virtual application when roaming in an open environment, which may comprise both fixed and moving obstacles, as described and exemplified above, rather than in a controlled environment, which has to be specifically adapted for the experience, a method is suggested where the user will become aware of such obstacles, sufficiently in advance for the user to adapt the applied strategy, where this can be done at a level of awareness which introduce a minimum of disturbance to the overall virtual experience. More specifically, a potentially hazardous obstacle, appearing at a safe distance from a user will be presented to the user in a relatively discrete manner, whereas an obstacle, considered as an obstacle which, within a short notice, may appear as a hazardous obstacle due to its relatively close location to a user will be presented to the user in a more distinct way. In the latter case, it may even be justified to significantly interfere with the virtual experience, in order to, at least temporary, draw the user's full attention to the real world, especially in situation, where a user has neglected alerts, previously provided to the user from the application. By moving away from a potential hazardous geographical area, a user will be able to again have full attention to the virtual experience, thereby experiencing a dynamic assistance when executing a virtual experience in an, at least occasionally, potentially hazardous physical environment.

As will be explained in further detail below, a method capable of assisting a user, engaged in a virtual experience in a potentially hazardous physical environment, will require that a user is provided with a VR headset or any other type of electronic presentation equipment, adapted for presenting the virtual experience to the user, where such equipment is provided with, or connected to processing equipment, capable of executing the assisting functionality, as described herein, based on sensor data, which may be acquired from sensors of the VR headset or the corresponding equipment. In addition, a VR headset may also be capable of acquiring sensor data from external sensors, with which the VR headset is capable of communicating with wirelessly, using any type of known communication protocol, such as e.g. Bluetooth, ZigBee or WiFi. Furthermore, sensor data acquired from other user equipment, used e.g. by another player of a virtual experience may be used for obtaining a more enhanced picture of the present physical environment. If contribution from other users is available, such contributions may also comprise acquiring and processing of manually added information, provided by users.

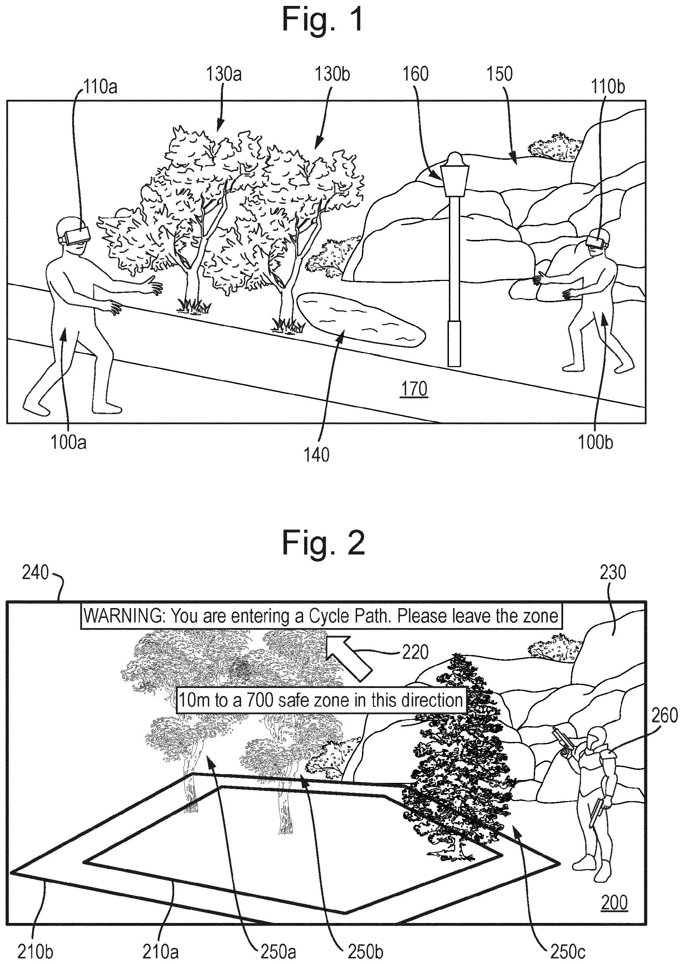

Fig. 1 is showing an example of a scenario where one or more users playing a VR based game can apply a method as suggested herein. Fig. 1 is illustrating two players 100a, 100b, each wearing a respective VR headset 110a, 110b in an environment comprising both open spaces, with areas which are generally suitable for playing the game without any disturbance or hazard, but where, at least occasionally, certain areas may be exposed to dynamic obstacles which may call for the attention of each player 100a,100b, as well as fixed obstacles, such as e.g. trees 130a, 130b, ponds 140, mountains 150 and lamp posts 160. A gaming environment may also comprise roads and/or bike paths 170, which will, to at least some extent, call for the players 100a,100b attention, but where the level of attention required by the player 100a,100b may differ, depending on the present circumstances, as identified from e.g. the available sensor input, as well as the category of player 100a,100b, such that e.g. depending on if the player 100a, 100b is an adult or a child, a novice or a trained professional, an obstacle will be handled differently by the suggested method.

More specifically, the suggested method introduce multiple risk levels, which are presented to a player 100a,100b in a VR scene, seen by the player 100a,100b, in the form of clearly distinguishable zones, where the appearance and accuracy of the zones may depend on e.g. the specific one or more obstacle under consideration, as well as on the reliability and/or availability of sensors.

The suggested zones will typically change appearance dynamically, as the risk for a respective user changes, based on how the user is moving in relation to potential hazardous obstacles, e.g. based on the guidance provided to the user from the application, as well as how movable potential hazardous obstacles are moving in relation to the user, thereby constantly reflecting the instant potentially hazardous situation for the user at his or hers present geographical location.

Below different ways of presenting updated and changing situations to a user are suggested, in order to provide a balanced trade-off between low risk and a high-level virtual experience. In a low risk scenario, zones are typically presented to a user as an overlay on a virtual scene, in a way which will introduce a minimum of disturbance to the user, whereas in a high risk scenario, parts of, or even the whole virtual scene, presented to a user via a user interface of a used communication device may become transparent, thereby naturally disturbing the virtual experience, but instead giving the user full attention to the whereabouts in the physical world, until either the potentially hazardous situation disappears, or the user moves away from the potentially hazardous geographical area, into a safe geographical area.

By applying a number of different types or categories of zones, a user's attention to a potential hazardous obstacle can gradually be raised or lowered, based on the estimated risk for the user, thereby also keeping the level of disturbance to the user at a suitable level at all times during execution of a virtual experience.

A change of the estimated risk for the user may also be used as a trigger for changing the frequency at which data is captured by, and consolidated from, available sensors. Thereby an estimated increased risk for a user may result in an increased data capturing frequency for one specific sensor or a specific group of sensors, so that the user can always be alerted of relevant updates also at a minimum of experienced time delay.

Fig. 2 is showing an example of a view 200, as seen by a player of a VR game, when engaged in playing a VR based game. Fig. 2 is showing a virtual scene where a number of potentially hazardous obstacles, in this case a part of the cycle path 170, the two trees 130a, 130b, the lamp post 160 and the pond 140 of Fig. 1, are encircled by a first marking 210a, having the purpose of alerting the player to be aware of the risk of entering this marked geographical area, and a second marking 210b, alerting the player of the vicinity to the geographical area marked by the first marking 210a.

In view 200 the two trees 130a, 130b of Fig. 1 have been replaced by corresponding virtual trees 250a,250b, respectively, whereas the lamp post 160 of Fig. 1 is here represented by yet another virtual tree 250c, whereas the pond 140 of Fig. 1 is not shown but located well within the first marking 210a. In the present example, also the complete view 200 is encircled by a marked frame 240, indicating to the player that the view 200 comprise some kind of registered potential hazard. The mentioned markings 210a,21 0b thereby provide a clear warning to the player watching the mentioned view 200 to avoid the area encircled by the first marking 210a. In the present example, the cycle path 170 of Fig. 1 is not shown, but considered when the application generates the first 210a and the second markings 210b. According to another embodiment, the cycle path could have been illustrated as a virtual object which calls for attention by the player. Furthermore, in Fig. 2 the pond is not shown, since the player is located relatively distant from the pond. However, typically also the pond is registered by the application and may give rise to separate first and second markings, in case the player move in the direction of the pond.

Typically, the indicated zones, encircled by the respective markings 210a, 210b are appearing on the display of the player when the player is within a certain range of the potential hazardous area or object and heading towards or facing the direction of this area or object, here when facing the virtual game character 260. In addition to the markings 210a,210b, the display may comprise one or more additional messages and/or instructions to the player, instructing the player of the nature of the potential hazard, here represented by a warning message, saying "WARNING: You are entering a Cycle Path. Please leave the zone!".

In the example of Fig.2 there is also another instruction, indicating the closest way to exit the zone to the player, here with an arrow 220 and the text "10 m to a safe zone in this direction". The high rock, displayed in the rear of the play scene 200 is presented as a corresponding virtual rock 230 representing the real rock 150 of Fig. 1, thereby indicating to the player that this specific geographical area is to be considered as an area that is not only hazardous but more or less impossible to enter. No marking is shown in association with the rock 230, since this physical obstacle, represented by the virtual rock 230, is located at a safe distance to the player, but relevant markings, providing a warning to the player also of this rock 150 may appear if the player moves closer to the rock/virtual rock 150/230 when continuing to play the game.

As indicated in Fig. 2, the whole scene 200 viewed by the player on the display of the VR headset is encircled by a frame 240, typically presented as a colored frame, where the marking 240 will disappear, when the player has changed direction, or has moved sufficiently away from the potential hazardous situations, and is instead facing a scene which is completely void of any potential hazardous situation. Alternatively, new markings, providing warnings for other potential hazards may appear instead. In addition to, or as an alternative to warning text, symbols and use of different colors, for signaling different levels of risk, and/or additional features, such as e.g. haptic effect and or a transparency mode, which will be further described below, may be applied in the players view.

The suggested method will rely on the availability of a continuously updated digital map, from hereinafter referred to as an environmental map, to an application, such as e.g. a VR based game which, at every time instant is providing a representation of a real environment in relation to the virtual world, to an application. Such an environmental map may be generated and updated in a number of alternative ways. Typically, environmental maps are stored in available storage, which may e.g. be included in an application server, or accessible to an application server or storage in an Edge Cloud, from where users with access rights will be able to access relevant map information whenever engaged in a virtual experience. Access rights may depend on e.g. one or more of: type of usage, application used and whether the environment in which the user is to apply an application is part of a private or public area.

Environmental maps may also be available at different layers, where each layer may represent a specific access level. One basic layer may e.g. comprise key structures, which may include fundamental objects, such as e.g. streets, stairways and ditches, allowing different applications to map known positions and objects to a respective risk level, depending on different aspects, such as e.g. a registered user profile of a respective user. A basic layer may also comprise meta data which may be relevant to respective key structures, such as e.g. known statistics on the amount of vehicles, which are normally passing in a certain direction of a specific street at different times of the day and/or on different knowledge of heavy machinery, using a street e.g. due to temporary construction work or bike races, planned to take place at a certain date and within a certain time interval.

**In** addition to such a basic layer, additional layers, comprising e.g. more detailed map data, may also be accessible e.g. to certain applications, or to a specific category of users. Different layers may also be available during different times of the day, during different weekdays or during different parts of the year. Furthermore, different layers of environmental maps may be accessible due to the present access of sensor data, so that e.g. absence of certain sensor data, results in that a certain layer is not accessible, e.g. since sufficient quality of that layer cannot be guaranteed. Also, determination by the application that acquired sensor data is temporary unreliable may result in, at least temporary suspension of a certain layer.

Selection of a certain risk level when activating an application, may also result in accessibility to one or more specific layers of environmental maps. Available environmental maps are typically continuously updated, where such an update is typically based on available sensor data, but environmental maps may also be updated based on user input, manually provided from users, when using one single application or even different types of applications, as long as these applications are capable of sharing available user input.

Individual input, as well as crowdsourcing, may be applied for collecting relevant data for updates of environmental maps. More specifically, a steep staircase may be manually registered as a potential hazard to people using wheelchairs and children, but a warning may only be required for others, whereas a very slippery staircase may be registered as a potential hazard for everyone. A temporary slippery spot, describes a situation which will typically not be available in any permanent map data. In such a situation, crowdsourcing may be a preferred way of temporary providing a warning to other users, whereas a transition to a normal situation, i.e. where a previously slippery spot is no longer slippery can easily be identified, either manually or automatically, and notified to the other users.

By automatically labelling potential hazards of an environmental map with a label, categorizing the potential hazards and a risk level of that potential hazard, an application will be able to prioritize sensor input associated with potential hazards e.g. in case of capacity constraints, experienced by the application.

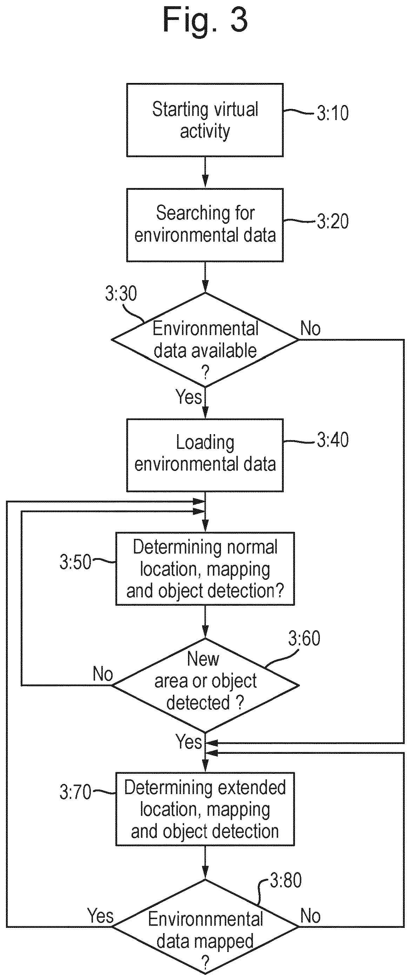

A method for assisting an application, capable of providing a virtual activity, according to one embodiment, will now be presented with reference to Fig. 3, where a virtual activity is first started, as indicated with step 3:10. Starting a virtual activity is here to be construed as comprising starting any type of conventional virtual activity, such as e.g. a VR based game, where the application, running the virtual activity is also capable of executing an assisting functionality, capable of assisting a user with extended guidance for avoiding potential hazards as described herein. Prior to the activation, a user profile may have been entered, thereby allowing a user to be categorized, so that a suitable level of assistance is provided to that user. In addition, a user may have manually provided input for adapting the mentioned categorization.

In a next step 3:20, the application search for available environmental data, such as e.g. a stored environmental map of the geographical area that a user is viewing via e.g. a VR headset. As already mentioned above, the environmental map, available to a respective user, may vary, depending on e.g. user, application and/or the present circumstances, such as e.g. access to specific sensor data. If required environmental data is available, as indicated with a "yes" branch from step 3:30, relevant environmental data is being loaded to the application, as indicated with a next step 3:40. The environmental data comprise data suitable for providing an environmental map, which typically include at least positioning data on permanent structures, such as e.g. bushes, walls, walk paths and roads, as well as data on identifiable dynamic objects, which are not contained in any map, such as e.g. data on vehicles, people, as well as identifiable meta data, which may further specify certain potential hazards.

The available environmental data is then used by one or more algorithms of the application for determining, what is here referred to as normal location, mapping and object detection, as indicated with step 3:50. The location and mapping may typically be executed by any type of SLAM (Simultaneous Location And Mapping), IMU (Inertial Measurement Unit), Lidar or radar technology, alone or in combination, whereas object detection may be executed by acquiring and evaluating available sensor data. As long as no, so far, unexploited geographical area is being detected by the application, i.e. the user is stationary and the already know environmental information can be reused for location, mapping and object detection, as indicated with the "no" branch of Fig. 3:60, the normal execution, mentioned above will be sufficient for the required location, mapping and object detection, and step 3:50 is repeated, accordingly.

If, however, a new area and/or physical object is detected, as indicated with the "yes" branch of step 3:60, what can be referred to as extended location, mapping and object detection, as indicated with step 3:70, will instead be executed. The latter step will also be executed if step 3:30 resulted in the "No" branch, i.e. relevant environmental information could not be found when an application was initiated by a user. The extended location mapping and object detection of step 3:70, implies that the mentioned activities need to be executed without any access to any historical data, but that only presently captured data is available. Thereby a relevant environmental map of a specific, relevant geographical area needs to be generated. Also the extended execution may be based on use of suitable location and mapping technology, as well as acquiring and evaluating available sensor data. In the latter scenario, the frequency of capturing one or more certain types of sensor data may automatically be increased, in order to obtain sufficient amount of data, for being able to obtain a sufficient accuracy in a sufficiently fast manner. As a result of the extended execution in step 3:70, the application is now provided with information, which is relevant for the new scene, experienced by the user. Although Fig. 3 describes two different processes for executing location and mapping, it is to be understood that other location and mapping mechanisms which do not require separate processes, but which are capable of handling both types of scenarios in one single process may be applied alternatively.

In a next step 3:80 it is determined if the environment has been mapped accordingly. Determination of unreliable or inconsistent sensor may be an indication that the mapping is insufficient. If it is determined that the environment has been sufficiently mapped, as indicated with the "Yes" branch of step 3:80, a continuous updating process of the location, mapping and object detection can be continued by the normal execution, as indicated with step 3:50, whereas if no sufficient environmental mapping has been achieved, as indicated with the "no" branch of step 3:80, the extended execution of step 3:70 will be repeated, until it is determined by the application that an environmental mapping with sufficient accuracy has been achieved, i.e. the accuracy of the environmental mapping is considered to exceed a specified threshold level. The suggested procedure continues until it is terminated automatically or manually.

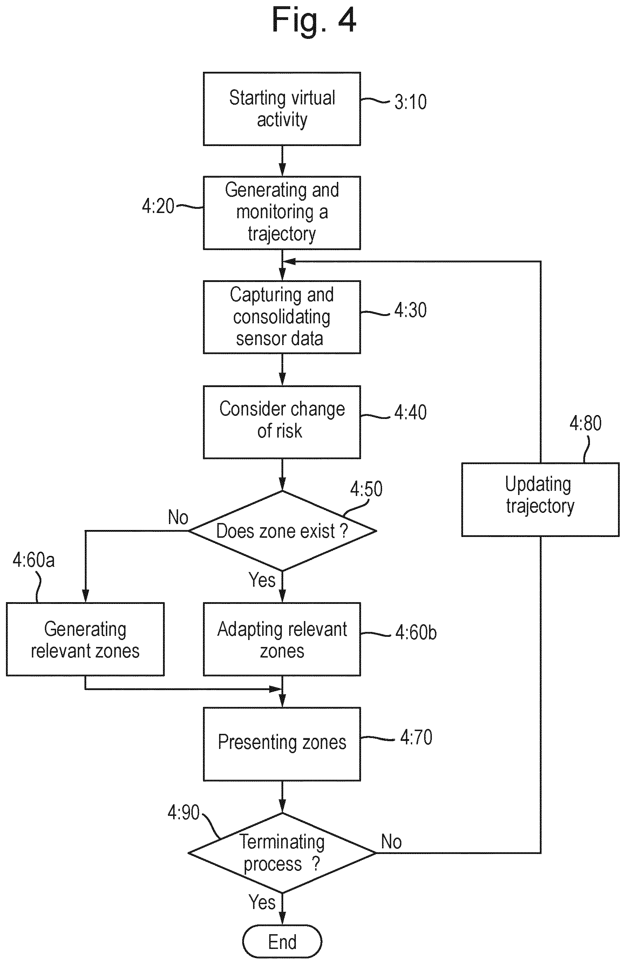

Parallel to the method of generating and updating an environmental map, e.g. as described above, with reference to Fig. 3, the environmental map will be used as a basis for determining the whereabouts of potential hazards and for generating and providing extended information to a user about such potential hazards. Such a method, according to one embodiment, will now be described in further detail, with reference to Fig. 4, where a virtual activity, such as e.g. a game, a simulation, or a maintenance task, in a first step 3:10, is started, as already mentioned above, with reference to Fig. 3, by a user activating an electronic VR equipment, provided e.g. in the form of a headset, wearable, or any other type of electronic equipment which is capable of presenting a virtual scene to the user, typically on a display, of receiving user input via one or more UIs (user interfaces), and of communicating with other user electronic equipment, useful for execution of the relevant VR application, such as e.g. a server, sensors, other communication devices or a cloud based function. From hereinafter such a VR equipment will be referred to as a communication device.

As the user of the virtual activity starts to react to a scene presented to the user, a trajectory of the communication device is being generated and monitored, and can therefore be determined by the described application, as indicated in another step 4:20. The trajectory, which is based on real time and historical data, is used for showing the present direction of movement and for predicting the most probable future movements. The actual prediction methods are not the focus of this document, but any type of known and applicable prediction method may be applied for predicting a user's coming whereabouts. The determining of a trajectory typically includes a positioning of the user, by applying any type of known positioning equipment, such as e.g. GPS (global positioning system). When determining the trajectory, the pose of the communication device may also be determined, e.g. with the help of a 2D or 3D camera, incorporated with, or connected to the communication device. A method, such as e.g. SLAM (Simultaneous Localization and Mapping), may be applied for building a digital map of the environment and orienting the user in the environment, based on available sensor data, which can be used when deriving a trajectory.

In order to be able to determine the change of risk to the user, also the speed of a roaming user may be required. The speed of the user can be acquired from e.g. an accelerometer, incorporated with, or connected to the communication device.

In addition to a trajectory, sensor input will enhance the ability for the communication device to generate and update specific zones in a scene of a virtual application. For this reason, sensor data is captured from relevant, available sensors, such as e.g. one or more of light sensor, sound sensor, location sensor, infrared sensor, image sensor, radar-based object detector, gyro, magnetometer, altimeter, LIDAR, GPS and IMU. The captured data may also comprise data, which is based on user experience by other users, e.g. in a multi-player game scenario, where sharing of experience can result in an enhanced data capturing procedure. Data captured from available sensors and users is consolidated for forming a more representative basis of what zones that are required in a scene of a user. The consolidation of data typically comprise weighting of different categories of captured data according to fixed or dynamic weighting factors, configured so that the most relevant data is always considered at various scenarios for dynamically determining the need for zones in the view of the user when executing a VR application. Capturing and consolidating sensor data is indicated with step 4:30 of Fig. 4. When sensor data is consolidated is it typically also weighted so that available data can be evaluated relative to other available data, especially in situations when data can give a contradictive message. Local sensor data may e.g. be weighted higher in situations where GPS data is considered to not be reliable, whereas, for security reasons, environmental map data may be weighted higher than local sensor data when considering a potentially hazardous object in a warning zone.

Typically the capturing and consolidation of data comprises evaluation of one or more potential hazards within a scene of a user, but alternatively, a specific trend in data sensed from a specific category of sensors and/or certain events may be interpreted as a trigger for generating specific zones as a precaution measure, even though no immediate hazard is detected, but a certain risk level is detected during the capturing and consolidating phase. In the latter scenario, a zone of lower relevance to the user is generated and presented to the user in a relatively discrete way, thereby preparing the user for the possibility of later having a transformed zone, presented in a more distinct way, with a higher relevance, to the user, in case the risk is considered to have increased for the user, typically as a result of a user having moved in a direction which has resulted in that one of one or more threshold values has been exceeded. The scenario of considering a change of a risk to the user is indicated with step 4:40. A risk exceeding a specific threshold value may be based on relatively uncertain sensor input, e.g. by stating that measured sound from a vehicle indicates that a vehicle is approaching but still seems to be relatively far away, and thus merely triggering a text message, indicating that a vehicle is approaching from a certain direction, whereas more precise sensor data may imply that a vehicle is at a certain location, heading in certain a direction, which may pose a future risk to the user. In such a situation the vehicle may be identified as an obstacle, constituting a potential hazard, where an identified trajectory of the vehicle can assist the system in generating suitable zones at suitable geographical locations, and, thus, in providing more precise warnings to the user on an ad-hoc basis.

In a step 4:50 it is determined if one or more zones already exist or not, i.e. if zones considered to be relevant for the user when executing a specific virtual application according to predetermined rules, when located at the present geographical position with the present pose are available for presentation to the user.

If no relevant zones exist yet, e.g. due to that the virtual application has just been initiated, or the user is facing a new direction, relevant zones are generated, according to step 4:60a. Such generating of zones is based on the captured and consolidated data in combination with the trajectory of the communication device. Typically, also predefined rules and/or formulas are considered when determining the positioning and spread of the zones.

If, on the other hand, relevant zones already exist, the relevant zones are instead adapted, corresponding to predefined rules and/or a determined change of the relevant risk level, as indicated with alternative step 4:60b.

Once relevant zones have been generated and/or updated, the generated/updated zones are presented to the user in an updated scene, as indicated with a next step 4:70. During presentation the zones are presented together with virtual objects, relevant for the executed virtual application in its relevant context. Based on the added zone information, the user of the communication device will be able to control the virtual application so that the goal of the execution of the virtual application can be fulfilled with a minimum of disturbance, while the user can maintain roaming in a secure environment.

The described procedure can then continue to provide updated presentations to the user by updating the trajectory, as indicated with step 4:80, followed by updated processing of the steps, from step 4:30 and onwards, as already described above, until it is manually or automatically determined that the ongoing virtual activity, is to be ended, as indicated with the "Yes" branch of step 4:90.

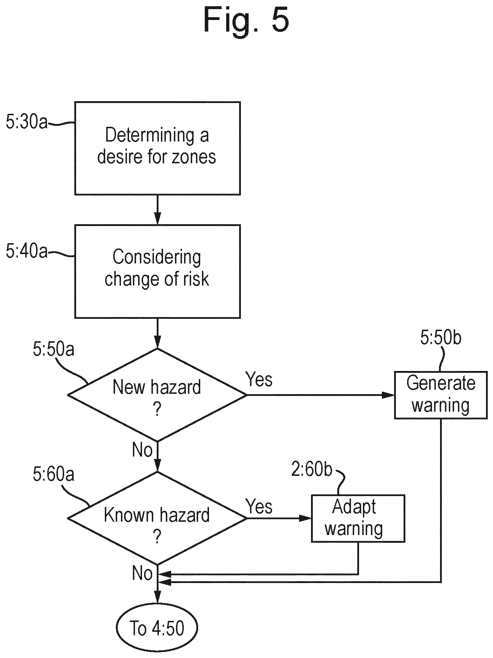

Parts of the method described above, with reference to Fig.4 will now be described in further detail with reference to Fig. 5. In a first step 5:30a, which forms part of step 4:30 of Fig.4, it is determined by the application that zones are required, i.e. that zones must either be generated and/or adapted accordingly, in order to meet with predefined rules, applicable on captured and consolidated data. In a next step 5:40a, which forms part of step 4:40 of Fig.4, it is considered, based on the captured and consolidated data, and possibly also on available rules, whether or not the risk for the user of the communication device has changed to such an extent that the change will have effect on existing and non-existing zones. As indicated with step 5:50a, forming another part of step 4:40 of Fig.4, it is determined if the considered change of risk is caused by a new, previously not identified hazard. If this is the case, a relevant type of warning is generated, as indicated with step 5:50b. Such a warning may be presented in one or more forms to the user and may e.g. be presented in the form of visual information, audible information, haptic information or as a combination of these mentioned possibilities. Which type of technology to apply for the presentation may be automatically adaptable, such that, when a level of danger to a user increases, also the level of appearance of warnings to the user is gradually increased. By way of example, an approaching bicycle, registered by one or more suitable sensors may result in at least the audible warning:

"Bicycle is approaching from the left. Cycle path 2 m in front of you."

Such a warning will typically be accompanied with one or more relevant zones, presented to the user, indicating a geographical area which the user is encourages to avoid in order to minimize the risk of impact with the identified obstacle, in this case the approaching bicycle. Alternatively, a similar warning can be provided in the form of a corresponding text message, presented as an overlay over the scene presented to the user. In case of a haptic warning, the user may instead, or in addition, be encouraged by a haptic effect exposed to the user, e.g. via a haptic glove, to change direction, away from the identified hazardous area.

If instead the identified hazard is already known to the system, as indicated with step 5:60a, an already activated warning is instead adapted, as indicated with step 5:60b. Such an adaptation may e.g. be that the previous warning is changed to:

"Bicycle is approaching from the left. You are too close to the cycle path.
Move immediately at least 2 m back or fourth from your present location"

The process of Fig. 5 then continues to step 4:70 of Fig.4 by presenting the appropriate zones.

As has already been mentioned above, a plurality of users may contribute with data that can be used by the application for determining how to provide zones and possible additional warnings to a user, such as e.g. when a plurality of users are engaged in a multi-player VR game. In the latter situation, trajectories and/or sensor input from communication devices of one or more of the other users may be used in the mentioned decisions.

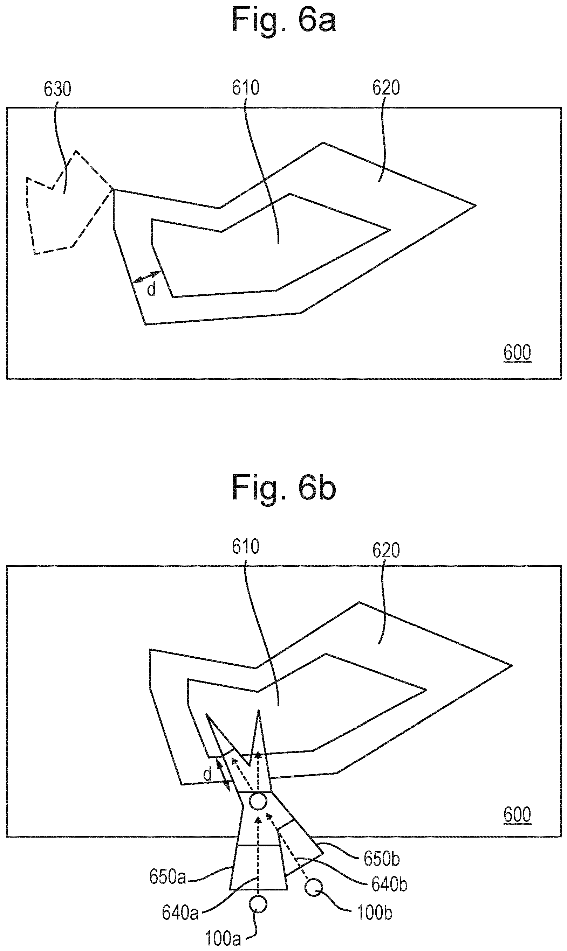

The different zones, which may be defined according to different zone types, will now be described in further detail, with reference to Fig. 6a, where a first zone 600 may be referred to e.g. as a safe zone, i.e. a geographical area within which it is safe for the user to roam, since no considerable risk or obstacle which potentially could be a hazard to the user is known withing this area. When the user is identified to be located within a safe zone and also within a predetermined margin from any other zone with a higher risk level, the scene of the executed application is presented to the user in a conventional manner, i.e. no zones or warnings, as suggested herein, are presented to the user. It is to be understood that, depending on implementation, also a safe zone may comprise obstacles which may potentially be a hazard to the user, but, in such a scenario, such an obstacle may be indicated as a static or fixed virtual object to the user. By way of example, a tree in the real world may be presented as a virtual tree in the scene presented to the user, thereby, indicating to the user that it is not possible to walk in the particular path where the tree is presented. In other words, a physical object may not be considered as a potential hazard as long as the user is made aware of that a fixed object is present at such a location, by being exposed to a suitable virtual object. Alternatively, such a virtual object, representing a corresponding real object may be indicated in a certain color. By replacing a real physical object which could potentially be a hazardous obstacle to a user by a suitable virtual object, the amount of warnings and distractions exposed to the user during execution of a virtual activity can thereby be further minimized, since more real objects can blend smoothly into the virtual environment.

A zone type which is based on the fact that a physical obstacle is posing a potential threat to a user, may be referred to as a danger zone 610, which is a geographical zone where there is at least one fixed of mobile physical object or geographical area, which is considered hazardous to the user if the user is located within that zone. In addition to presenting a danger zone as a geographically limited area, also one or more types of warnings, as has been described before, e.g. with reference to Fig. 2, will be presented together with this type of zone, when there is an estimated risk that a user will be approaching or even enter this type of zone. As has already been touched upon above, the obstacle of a danger zone can also be expressed by the application as a virtual object which is practically impossible by a user to pass, such as e.g. a fire, lava bed, a high wall, cliff or a steep mountain, thereby indicating to a user that this is a geographical area which should not even be considered to enter.

A danger zone 610, or a corresponding zone, is always accompanied by an additional zone type, surrounding the danger zone 610, which is herein referred to as a buffer zone 620. As implied by its name, a buffer zone 620 has the main purpose of acting as a buffer between a zone of lower risk level and a higher risk level, here represented by a danger zone, thereby indicating to the user that close to the present scene of a virtual activity there is some potential hazardous object, which is encircled by a danger zone 610, but that, as long as the user roams within the buffer zone 620 it should be safe to continue to execute the ongoing virtual activity.

A user entering a buffer zone 620 from a safe zone 600 may trigger one or more groups or categories of sensors to capture sensor data at an increased frequency, in order to enable a faster and more precise reaction to the user, later entering a danger zone 610 from the buffer zone 620. The danger zone 610 is typically also presented to the user, in combination with appropriate warnings, such that it is obvious to the user that the user should leave the danger zone as soon as possible. **If** a user has entered a danger zone 610, the user may therefore also be presented with instructions, indicating to the user how the user can best leave the danger zone, e.g. via a safe walking path.

Optionally, yet another zone, here referred to as a warning zone 630 or alerting zone, may be applied, where such a zone has the main purpose of indicating to the user that a potential hazard may be about to arise in the zone, but that there is no imminent hazard to be in that zone. By way of example, a bike may be heading in the direction of the user, who is located close to or whose trajectory appears to be about to approach a bike path. Before such a potential hazard can be dismissed, e.g. due to that the bicycle stops, or changes direction, a warning zone 630 may be generated, urging the user to stay out of this warning zone 630 if possible, or at least be cautious about the one or more potential hazards. A warning zone 630 is not provided with any associated buffer zone 620, due to its lower relevance. **If a** potential hazard that has resulted in the generation of a warning zone turns out to be a real hazard, i.e. it becomes obvious that the trajectory of the user and the potential hazard will cross each other's paths, a warning zone 630 can be transformed into a danger zone 610, circumvented by a generated, associated buffer zone 620. A warning zone 630 may alternatively be used for warning the user of a slippery pathway, e.g. based on input from other users, having already experienced the slippery pathway.

Obstacles may, depending on their nature, give rise to more or less permanent, or static zones. This can be the case with obstacles such as e.g. roads, bridges, stairways, lakes and ponds, where such obstacles can give rise to different specific zones already at the start of a virtual activity, e.g. based solely on environmental maps or other pre-registered information, whereas other zones are more or less dynamic, due to the dynamic nature of the potential hazard, such as e.g. a bicycle, temporary appearing on a bike path.

Fig. 6b is showing a somewhat similar area as Fig. 6a, with a safe zone 600, a danger zone 610, and a buffer zone 620. The figure also shows two players 100a,100b, each using a respective user device (not shown), such as e.g. VR headsets.

For each player 100a,100b there is a respective trajectory 640a, 640b, generated and used by the application, executed by the players 100a,100b, indicating the expected movement path of the users. In the given example two players are executing the same VR application and can therefore share data, on the basis of which zones can be generated and updated. Based on available data and trajectories 640a, 640b, a danger zone 610 and an associated buffer zone 620 have been generated, with a distance d between the borders of the buffer zone 620. Each trajectory 640a, 640b is associated with a corresponding trajectory cone 650a,650b, generated by the application, based on available input data. Trajectory cones 650a,650b may be generate based on sensor input, providing information on geographical position, direction of movement, speed of movement and pose of a communication device, based on data captured from e.g. one or more of a digital camera, a radio frequency receiver, a LIDAR, a motion and a speed detector, possibly in combination with pre-stored static data, such as environmental map data. The trajectory cones 650a,650b are generally to be seen as internal tools, to be used by the application when predicting where a player 100a,100b is about to move and, thus, when the player 100a,100b, need to be alerted of an upcoming potential hazard, but the trajectory cones 650a,650b may also be presented to the player 100a,100b, as an indication of the probability that the player 100a,100b will be exposed to a potential hazard. The probability that a player 100a,100b will move in a certain direction is represented by the trajectory cone, starting with a wider base at the present geographical location of the player, narrowing down as data on the respective trajectory 640a, 640b is continuously updated.

As a player 100a, 100b is changing direction of movement, the trajectory cone 650a,650b is updated with a new, predicted direction of movement. Depending on configuration, trajectory cones 650a, 650b may be used only as an estimation tool by a gaming or application engine, or it can also be presented to each player 100a,100b, for the purpose of strengthening the illustration of possibilities that a player 100a, 100b will be entering e.g. a danger zone 610 when being located in a safe zone 600 or a buffer zone 620. Based on the trajectory 640a, 640b, indicated by a dotted arrow, of a trajectory cone 650a, 650b, the application will be able to predict an estimate direction of movement of a player 100a, 100b, thereby also estimating the probability that a respective player 100a, 100b is about to enter into a buffer zone 620 or a danger zone, or if the player 100a, 100b just seems to be about to pass over a buffer zone 620 into a safe zone 600.

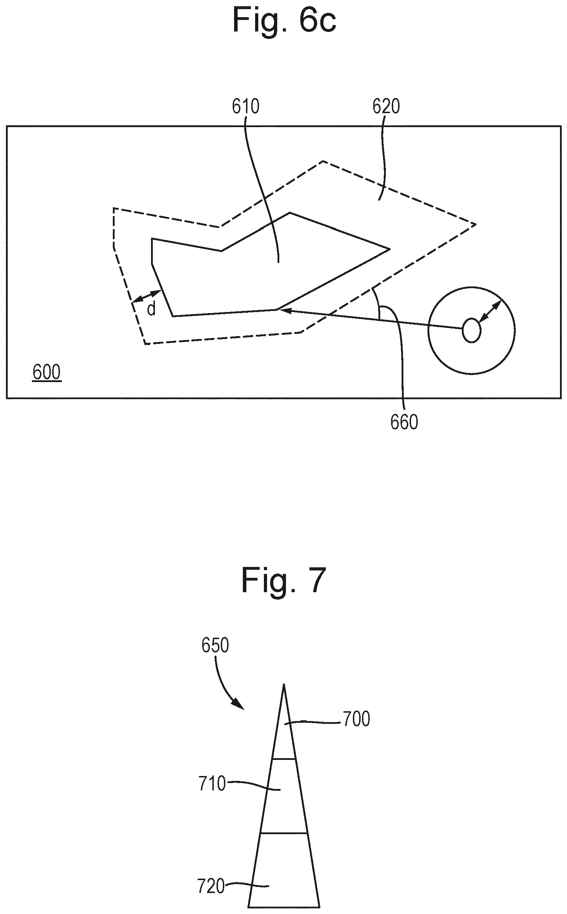

As already indicated in Fig. 6a and 6b a buffer zone 620 can be configured to apply a dynamic distance "d" between the outer and the inner boundary of the buffer zone 620. Fig. 6c is illustrating a scenario where the distance d is typically determined based on the moving speed of a user, as well as the direction, or trajectory of the user, in relation to a known potential hazard (angle towards zone perimeter), and may also consider a distance that a user has suddenly moved, which calls for an update of d, and a time to allow the user to move in the buffer zone 620 , before entering a danger zone 610. d can therefore be determined as follows:

$$d = \text{sudden moved distance} + \text{speed} * \text{time} * \text{angle towards zone perimeter} \quad (1)$$

By way of example, a sudden movement of a user within a predetermined time interval, such as e.g. a movement of 2 m between two measurements, when the user is moving at an estimates speed of 2 m/s, and should be allowed to walk through the buffer zone in 2 s before reaching the danger zone. According to the example, the user is moving at an angle of 45 degrees towards the perimeter of the danger zone. In the present example the distance d will be set to 4, 83 m

Generally, warnings presented to a player 100a,100b, may be provided with gradually increasing intensity, such that e.g. the color used for marking a specific zone may gradually change e.g. from yellow, to orange and finally to a red nuance, in the latter case possibly also with a flashing appearance, thereby signaling the increased risk to the player 100a,100b. Furthermore, or alternatively, if a player 100a, 100b entering a buffer zone is exposed to a haptic effect, e.g. via a haptic glove or suit, worn by the player 100a,100b, such a haptic effect may be gradually increased as the player is moving through the buffer zone 620, towards a danger zone 610.

Yet another way of increasing the awareness of a player 100a,100b when the player 100a,100b is estimated to face an increasingly hazardous situation e.g. by being about to enter into a buffer zone 620 or danger zone 610 is to apply a transparency feature in the view of the player 100a,100b, such that when the player 100a,100b is about to entering a buffer zone 620 and at the same time the trajectory 640a,640b is implying that the player 100a,100b is heading in the direction of an associated danger zone 610, an initially lower grade of transparency, thereby allowing the virtual view in the direction of the buffer zone and danger zone to gradually fade out, and instead gradually present the real world to the player 100a,100b. If the player 100a,100b proceed from a buffer zone 620 towards a danger zone 610, or even is about to proceed into a danger zone 610, the transparency level will gradually increase, potentially to a 100 % transparency level, where the virtual view may have been completely replaced by the real world, thereby clearly indicating to the player 100a,100b, that it is not considered safe to continue to play the game under the present circumstances.

In certain situations, settings may be adapted automatically, i.e. based on which registered user that is about to execute a VR based application, or manually, where a user is manually adapting settings to a more or less risky approach. By way of example, an adult may e.g. adapt the settings of an application about to be used by a child, such as e.g. a VR based game, so that alerts that are usually activated when a player is entering a danger zone, such as e.g. strong haptic effect in combination with a rapidly increasing level of transparency, may be set to be more rapidly activated, even already in a buffer zone, in order to decrease the level of risk that the player can ever be exposed to when playing an VR based game in an open air environment. In another scenario, a person using a wheelchair may play under more restricted conditions, with a lower bar to activation of certain or all warnings and instructions.

Fig. 7 is illustrating an example of a trajectory cone, which is giving an estimation of whether a user will be maintaining in a respective zone or move from one zone to another one. In Fig, 7, the trajectory cone 650 comprise a part 720 of the cone representing the safe zone, another part 710 representing a buffer zone and a third part 700, representing a danger zone.

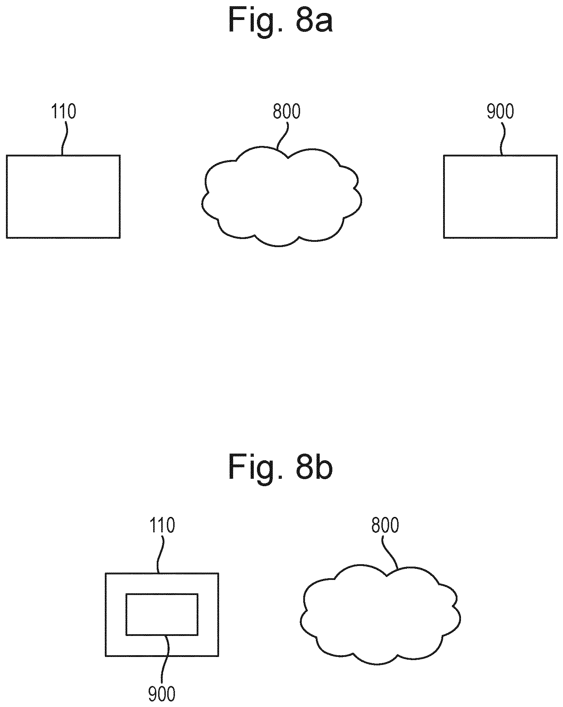

The method described above is suitable for execution on any type of equipment on which a virtual application, as defined herein, can be executed. This includes VR headsets, VR goggles or VR adaptors in combination with a separate app or integrated software/hardware. Throughout this document such an equipment will be referred to as a user device. The actual implementation of functionality for executing the suggested zone based mechanism described herein may be done in different ways. According to one embodiment, illustrated in Fig. 8a, user equipment 110, such as e.g. a VR headset, capable of presenting an environment to a user, is provided as a separate entity, comprising at least a display, a camera and capable of communicating with a separate communication device 900, via a communication network 800, which may be based on any type of suitable communication network, such as e.g. Wi-Fi, Long Term Evolution (LTE), LTE-Advanced, 5G, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB).

If provided as separate entities, communication device 900 comprise processing functionality, capable of executing an application for providing and updating zones as suggested herein. User equipment 110 may also comprise one or more sensors, capable of capturing sensor data, to be used by the application. Typically, additional sensors are provided on other user equipment/communication devices, which are capable of providing such additional sensor data to the application. In addition, or alternatively, sensor data may be provided from other fixed or mobile entities in the relevant environment, which are located within communication range of the communication device 900 and the application. The latter arrangement can be suitable in situations where the time delay in the communication between the user device 110 and the communication device 900 is acceptable, considering the executed application. Communication device 900 may be a dedicated device, specifically configured for providing and updating zones as suggested herein, or may form part of a server or a cloud based solution.

According to another embodiment, illustrated in Fig. 8b, the user device 110, comprise a communication device 900 as an integrated part of the user device 110. Such an integrated arrangement will be suitable in situations where time delay may be a critical issue.

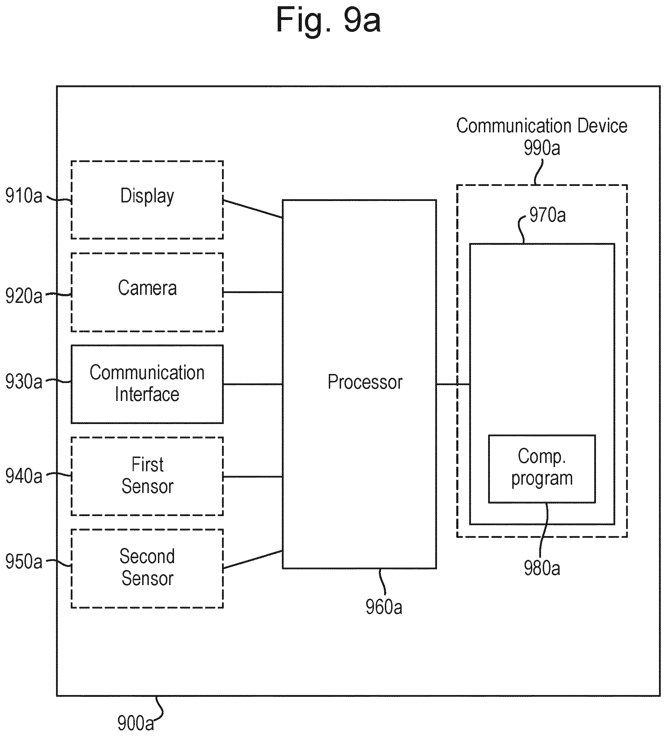

A communication device 900a, according to one embodiment, will now be described below with reference to Fig. 9a. where the communication device 900a comprises a communication interface 930a, for communicating at least with other sources of sensor data, as described above. If the communication device 900a is configured as an entity comprising also a user device 110, it also comprise a display 910a, a camera 920a and potentially also one or more sensors 940a, 950a, but, as has already been mentioned above, display 910a, camera 920a and sensors 940a, 950a, may be arranged on a separate user device 110. Communication device 900a also comprise at least one processor 960a and at least one memory 970a, comprising executable instructions, in the form of a computer program 980a.

The memory 970a can be any combination of random access memory (RAM) and/or read only memory (ROM). The memory 970a typically also comprises persistent storage, which, for example, can be any single one or combination of magnetic memory, optical memory, solid-state memory or even remotely mounted memory. The processor 960a may comprise e.g. one or more central processing unit (CPU), multiprocessor or digital signal processor (DSP).

The processor 960a can be any combination of one or more of e.g. a suitable central processing unit (CPU), multiprocessor, microcontroller, digital signal processor (DSP).

More specifically, a communication device 900a, adapted for enabling execution of a virtual activity in a physical environment, wherein development of the virtual activity is presented to a user via at least one user interface of the communication device 900a, is suggested where the communication device 900a comprise a memory 970a and computer readable instructions, which when executed by a processor 960a of the communication device 900a, causes the communication device 900a to determine a trajectory of the communication device 900a; to capture and consolidate sensor data associated with the physical environment and virtual data associated with the virtual activity, to generate at least two mutually dependent zones in the physical environment based on the captured and consolidated data and the trajectory of the communication device 900a, and to present an updated scene of the virtual activity, comprising at least parts of the zones via at least one of the user interfaces of the communication device 900a.

The communication device 900a can be caused to dynamically adapt at least one of the zones, based on updated captured and consolidated data and an updated trajectory of the communication device 900a and present at least part of the at least one of the zones via at least one of the user interfaces of the communication device 900a during execution of the virtual activity.

The communication device 900a may also dynamically adapt at least one of the zones based also on at least one trajectory of at least one user, other than the user of said communication device 900a, which is made available to communication device 900a.

The communication device 900a may generate zones in response to determining that at least one physical object of the physical environment appear as a hazard to the user of the communication device 900a. Zones may also be generated by the communication device 900a, where the generated zones comprise a first zone type, adapted to circumvent at least a first physical object of the physical environment, which is considered as a hazard to the user of the first communication device, and a second zone type, adapted to circumvent the first zone type, but which does not circumvent any additional physical object of the communication device 900a.

The communication device 900a may also be capable of generating a third zone type in case an estimated risk that a second physical object will appear as a hazard to the user of the communication device 900a in a certain geographical area of the physical environment exceeds a first threshold value, and to convert the third zone type to a first zone type which is circumvented by a second zone type, in case the estimated risk that the second physical object will appear as a hazard to the user of the communication device 900a in the geographical area of the physical environment exceeds a second threshold value.

The communication device 900a may be capable of determining if a physical object is a potential hazard to the user of the communication device 900a based on at least one of: the size of the physical object, the shape of the physical object, the speed of the physical object, data aggregated from at least one user of another communication device than communication device 900a, the trajectory of the communication device 900a, at least one physical property of the physical object, and the trajectory of the physical object.

The communication device 900a may be capable of considering at least one physical property comprising at least one of: a material comprised in the physical object, a temperature and a density for determining if the physical object is to be considered as a potential hazard to the user of communication device 900a.

The communication device 900a, may be capable of aggregating data on the basis of which a physical object is considered as a hazard or potential hazard to the user of the communication device 900a, from at least one user of another communication device than communication device 900a.

The communication device 900a may be capable of estimating the relevance of any of the hazard or potential hazard with respect to the communication device 900a based on at least one of: a trajectory of the communication device 900a; a trajectory of the physical object; data, associated with the user of the communication device (900a), and data, associated with at least one user of a communication device, other than said communication device 900a.

The communication device 900a may also be capable of presenting at least one of a warning or instruction, alerting the user of the appearance of at least one of the hazard and potential hazard, wherein the purpose of the instruction and/or warning is to direct the user of the communication device 900a away from the border between the second zone and the first zone. The communication device 900a may be capable of presenting a warning and/or instruction in any of a number of different form, such as e.g. one or more of: at least one of the form of: audible information, visual information, and haptic information.

In situations where the hazardous or potential physical object is a movable object, the communication device 900a is capable of dynamically adapting at least one of the zones based also on a trajectory of the hazardous physical object.

In addition to what has been mentioned above, the communication device 900a is capable of presenting at least a part of at least one of the adapted zones as a transparent part of the presented development of the virtual activity, wherein the level of transparency of the transparent part can be adapted, depending on an estimated relevance of the hazard with respect to the communication device 900a. In order to minimize the disturbance of the ongoing virtual activity, the communication device 900a may present the transparent part of the adapted zones on a specific part of the display, wherein the specific part is selected based on the location of the presently presented virtual activity on the display.

The communication device 900a may be capable of capturing and consolidating sensor input from at least one of: the communication device 900a itself, at least one other communication device and at least one sensor capable of capturing data from the physical environment.

The communication device 900a is capable of presenting development of the virtual activity on at least one user interface comprising a graphical display.

The communication device 900a is capable of capturing sensor input from a plurality of different types of data sensors, such as e.g. one or more of light sensor, sound sensor, location sensor, infrared sensor, image sensor, radar-based object detector, gyro, magnetometer, altimeter, LIDAR, GPS, IMU.

The communication device 900a is capable of adapting the frequency for capturing and consolidating at least parts of the captured and consolidated sensor data, where such adaptation can depend on at least one of: the extent of executed zone adaptations, determined environment conditions, level of trust for one or more sensors and the trajectory of the communication device 900a.

The communication device 900a may also comprise a computer program product, 990a, comprising a non-transitory computer readable medium on which a computer program is stored, which when run on the communication device 900a will cause the communication device 900a to execute a method as described above.

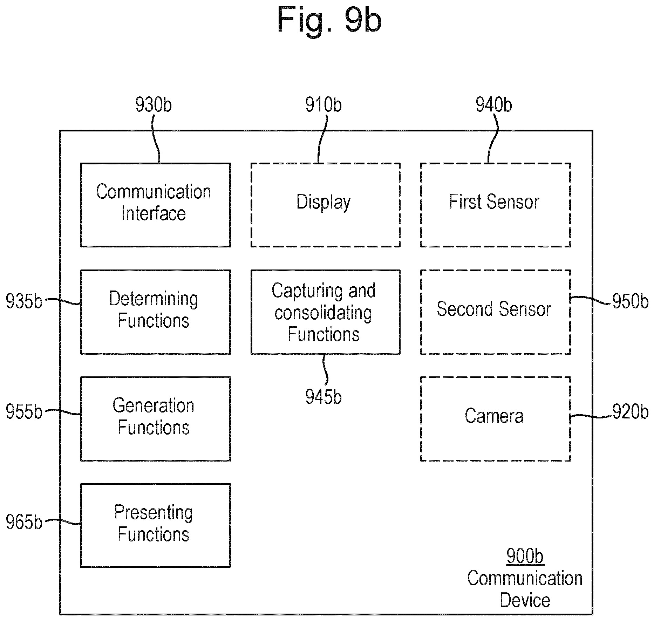

A communication device 900b, according to another embodiment, will now be described with reference to Fig. 9b, where the communication device 900b comprise a communication interface 930b, enabling communication at least with external data sensor sources, as well as with a user device, in case the user device and the communication device are not configured as one single entity. The communication device 900b, further comprise a plurality of functions or modules which are configured to mutually interact with each other. The functions or modules are typically implemented using software instructions. Alternatively, or additionally, the modules are implemented using hardware, such as any one or more of an ASIC Application Specific Integrated Circuit (ASIC), an Field Programmable Gate Array (FPGA), or discrete logical circuits.

More specifically, communication device 900b comprise a determining function 935b, configured to determine a trajectory of the communication device 900b; a capturing and consolidating function 945b configured to capture and consolidate sensor data, associated with the physical environment and virtual data associated with an executed virtual activity; a generating function 955b, configured to generate at least two mutually dependent zones in the physical environment based on the captured and consolidated data and the trajectory of the first communication device, and a presenting function 965b, configured to present an updated scene of the virtual activity, comprising at least parts of the zones via at least one of the user interfaces of the first communication device 900b. The communication device 900b may also comprise a display 910b, a camera 920b and at least one sensor 940b,950b.

It is to be understood that the exemplary functions, presented above, typically also will comprise other functional entities, such as e.g. power source and a user interface which have all been omitted from this document, since they are not considered as essential to the scope of the invention and since omitted functional entities are considered to be used in a conventional and well known manner.

It should be noted that the above-mentioned examples illustrate rather than limit the invention, and that those skilled in the art will be able to design many alternative examples without departing from the scope of the appended statements. The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e. the first or second of such features to occur in time or space) unless explicitly stated otherwise. Steps in the methods disclosed herein may be carried out in any order unless expressly otherwise stated. Any reference signs in the statements shall not be construed so as to limit their scope.

**Claims**

1. A method for assisting a user of a communication device with guidance for avoiding a potential hazard when the user is executing a virtual activity in a physical environment wherein change of the potential hazard is presented to the user via at least one user interface of the communication device, the method comprising:

    - determining (4:20), based on real time and historical motion sensor data of the communication device, a trajectory of the communication device, the trajectory representing present direction of movement and predicted movement;
    - capturing and consolidating (4:30) sensor data associated with the physical environment of the communication device and indicative of a potential hazard, and virtual data associated with the virtual activity;

- generating (4:60a) at least two mutually dependent zones based on the captured and consolidated sensor data and the trajectory of the communication device, and
- presenting (4:70) an updated scene of the virtual activity, comprising at least parts of the zones, via at least one of the user interfaces of the communication device, such that at least a part of the two zones appears gradually more transparent in the presentation, as the user approaches the potential hazard, and such that the transparency gradually decreases as the user moves away from the potential hazard.

2. A communication device (900a) for assisting a user of the communication device with guidance for avoiding a potential hazard when the user is executing a virtual activity in a physical environment, wherein change of the potential hazard is presented to the user via at least one user interface of the communication device (900a), the communication device (900a) comprising a memory 970a and computer readable instructions, which when executed by a processor 960a of the communication device (900a), causes the communication device (900a) to:

- determine, based on real time and historical motion sensor data of the communication device, a trajectory of the communication device (900a), the trajectory representing present direction of movement and predicted movement;
- capture and consolidate sensor data associated with the physical environment of the communication device and indicative of a potential hazard, and virtual data associated with the virtual activity;
- generate at least two mutually dependent zones based on the captured and consolidated data sensor and the trajectory of the communication device (900a), and
- present an updated scene of the virtual activity, comprising at least parts of the zones via at least one of the user interfaces of the communication device (900a), such that at least a part of the two zones appears gradually more transparent in the presentation, as the user approaches the potential hazard, and such that the transparency gradually decreases as the user moves away from the potential hazard.

3. The communication device (900a) according to claim 2, wherein the communication device (900a) is further caused to dynamically adapt at least one of the zones based on updated captured and consolidated data and an updated trajectory of the communication device (900a) and present at least part of the at least one of the zones via at least one of the user interfaces of the communication device (900a) during execution of the virtual activity.

4. The communication device (900a) according to claim 3, wherein the communication device (900a) is further caused to dynamically adapt at least one of the zones based also on at least one trajectory of at least one user, other than the user of said communication device (900a).

5. The communication device (900a) according to any of claims 2-4, wherein the communication device (900a) is further caused to generate the zones in response to determining that at least one physical object of the physical environment appear as a hazard to the user of the communication device (900a).

6. The communication device (900a) according to any of claims 2-5, wherein the communication device (900a) is further caused to generate zones comprising a first zone type, adapted to circumvent at least a first physical object of the physical environment, which is considered as a hazard to the user of the first communication device, and a second zone type, adapted to circumvent the first zone type, but which does not circumvent any additional physical object of the communication device (900a).

7. The communication device (900a) according to claim 6, wherein the communication device (900a) is further caused to generate a third zone type in case an estimated risk that a second physical object will appear as a hazard to the user of the communication device (900a) in a certain geographical area of the physical environment exceeds a first threshold value.

8. The communication device (900a) according to claim 7 wherein the communication device (900a) is further caused to convert the third zone type to a first zone type which is circumvented by a second zone type in case the estimated risk that the second physical object will appear as a hazard to the user of the communication device (900a) in said geographical area of the physical environment exceeds a second threshold value.

9. The communication device (900a) according to any of claims 5-8, wherein the communication device (900a) is further caused to determine if a physical object is a potential hazard to the user of the communication device (900a) based on at least one of: the size of the physical object, the shape of the physical object, the speed of the physical object, data aggregated from at least one user of a communication device other than said communication device (900a), the trajectory of the communication device (900a), at least one physical property of the physical object, and the trajectory of the physical object.

10. The communication device (900a) according to claim 9, wherein the communication device (900a) is further caused to consider at least one physical property comprising at least one of: a material comprised in the physical object, a temperature and a density.

11. The communication device (900a) according to claim 9 or 10, wherein the communication device (900a) is further caused to aggregate data on the basis of which a physical object is considered as a hazard or potential hazard to the user of the communication device (900a), from at least one user of a communication device, other than said communication device (900a).

12. The communication device (900a) according to any of claims 2-11, wherein the communication device (900a) is further caused to estimate the relevance of any of the hazard or potential hazard with respect to the communication device (900a) based on at least one of:

- a trajectory of the communication device (900a);
- a trajectory of the physical object;
- data, associated with the user of the communication device (900a), and
- data, associated with at least one user of a communication device, other than said communication device (900a).

13. The communication device (900a) according to any of claims 2-12, wherein the communication device (900a) is further caused to present at least one of a warning or instruction, alerting the user of the appearance of at least one of the hazard and potential hazard.

14. The communication device (900a) according to claim 13, wherein the communication device (900a) is further caused to configure at least one of an instruction and warning so that it is directing the user of the communication device (900a) away from the border between the second zone and the first zone.

15. The communication device (900a) according to claim 14, wherein the communication device (900a) is further caused to present at least one of a warning or instruction in the form of at least one of:

- audible information;
- visual information, and
- haptic information.

16. The communication device (900a) according to any of claims 2-15, wherein when the hazardous or potential physical object is a movable object, the communication device (900a) is further caused to dynamically adapt at least one of the zones based also on a trajectory of the hazardous physical object.

17. The communication device (900a) according to any of claims 2-16 wherein communication device (900a) is further caused to present at least a part of at least one of the adapted zones as a transparent part of the presented development of the virtual activity.

**Patentansprüche**

1. Verfahren zum Unterstützen eines Benutzers einer Kommunikationsvorrichtung mit Anleitung zum Vermeiden einer potentiellen Gefahr, wenn der Benutzer eine virtuelle Aktivität in einer physischen Umgebung ausführt, wobei eine Änderung der potentiellen Gefahr dem Benutzer über mindestens eine Benutzerschnittstelle der Kommunikationsvorrichtung dargestellt wird, wobei das Verfahren Folgendes umfasst:

- Bestimmen (4:20) einer Bewegungsbahn der Kommunikationsvorrichtung auf Grundlage von Bewegungssensordaten der Kommunikationsvorrichtung in Echtzeit und aus dem Verlauf, wobei die Bewegungsbahn eine aktuelle Bewegungsrichtung und eine vorhergesagte Bewegung darstellt;
- Erfassen und Konsolidieren (4:30) von Sensordaten, die der physischen Umgebung der Kommunikationsvorrichtung zugeordnet sind und auf eine potentielle Gefahr hinweisen, und von virtuellen Daten, die der virtuellen Aktivität zugeordnet sind;

- Generieren (4:60a) von mindestens zwei voneinander abhängigen Zonen auf Grundlage der erfassten und konsolidierten Sensordaten und der Bewegungsbahn der Kommunikationsvorrichtung und
- Darstellen (4:70) einer aktualisierten Szene der virtuellen Aktivität, die mindestens Teile der Zonen umfasst, über mindestens eine der Benutzerschnittstellen der Kommunikationsvorrichtung, sodass mindestens ein Teil der zwei Zonen in der Darstellung graduell transparenter erscheint, während sich der Benutzer der potentiellen Gefahr nähert, und sodass die Transparenz graduell abnimmt, während sich der Benutzer von der potentiellen Gefahr weg bewegt.

2. Kommunikationsvorrichtung (900a) zum Unterstützen eines Benutzers der Kommunikationsvorrichtung mit Anleitung zum Vermeiden einer potentiellen Gefahr, wenn der Benutzer eine virtuelle Aktivität in einer physischen Umgebung ausführt, wobei eine Änderung der potentiellen Gefahr dem Benutzer über mindestens eine Benutzerschnittstelle der Kommunikationsvorrichtung (900a) dargestellt wird, wobei die Kommunikationsvorrichtung (900a) einen Speicher 970a und computerlesbare Anweisungen umfasst, die bei Ausführung durch einen Prozessor 960a der Kommunikationsvorrichtung (900a) die Kommunikationsvorrichtung (900a) zu Folgendem veranlassen:

- Bestimmen einer Bewegungsbahn der Kommunikationsvorrichtung auf Grundlage von Bewegungssensordaten der Kommunikationsvorrichtung (900a) in Echtzeit und aus dem Verlauf, wobei die Bewegungsbahn eine aktuelle Bewegungsrichtung und eine vorhergesagte Bewegung darstellt;
- Erfassen und Konsolidieren von Sensordaten, die der physischen Umgebung der Kommunikationsvorrichtung zugeordnet sind und auf eine potentielle Gefahr hinweisen, und von virtuellen Daten, die der virtuellen Aktivität zugeordnet sind;
- Generieren von mindestens zwei voneinander abhängigen Zonen auf Grundlage der erfassten und konsolidierten Sensordaten und der Bewegungsbahn der Kommunikationsvorrichtung (900a) und
- Darstellen einer aktualisierten Szene der virtuellen Aktivität, die mindestens Teile der Zonen umfasst, über mindestens eine der Benutzerschnittstellen der Kommunikationsvorrichtung (900a), sodass mindestens ein Teil der zwei Zonen in der Darstellung graduell transparenter erscheint, während sich der Benutzer der potentiellen Gefahr nähert, und sodass die Transparenz graduell abnimmt, während sich der Benutzer von der potentiellen Gefahr weg bewegt.

3. Kommunikationsvorrichtung (900a) nach Anspruch **2,** wobei die Kommunikationsvorrichtung (900a) ferner dazu veranlasst wird, mindestens eine der Zonen auf Grundlage von aktualisierten erfassten und konsolidierten Daten und einer aktualisierten Bewegungsbahn der Kommunikationsvorrichtung (900a) dynamisch anzupassen und während der Ausführung der virtuellen Aktivität an mindestens einem Teil der mindestens einen der Zonen über mindestens eine der Benutzerschnittstellen der Kommunikationsvorrichtung (900a) darzustellen.

4. Kommunikationsvorrichtung (900a) nach Anspruch **3,** wobei die Kommunikationsvorrichtung (900a) ferner dazu veranlasst wird, mindestens eine der Zonen außerdem auf Grundlage mindestens einer Bewegungsbahn von mindestens einem Benutzer, bei dem es sich nicht um den Benutzer der Kommunikationsvorrichtung (900a) handelt, dynamisch anzupassen.

5. Kommunikationsvorrichtung (900a) nach einem der Ansprüche 2-4, wobei die Kommunikationsvorrichtung (900a) ferner dazu veranlasst wird, als Reaktion auf Bestimmen, dass mindestens ein physisches Objekt der physischen Umgebung als eine Gefahr für den Benutzer der Kommunikationsvorrichtung (900a) erscheint, die Zonen zu generieren.

6. Kommunikationsvorrichtung (900a) nach einem der Ansprüche 2-5, wobei die Kommunikationsvorrichtung (900a) ferner dazu veranlasst wird, Zonen, die eine erste Zonenart, die angepasst ist, um mindestens ein erstes physisches Objekt der physischen Umgebung zu umgehen, das als eine Gefahr für den Benutzer der ersten Kommunikationsvorrichtung angesehen wird, und eine zweite Zonenart zu generieren, die angepasst ist, um die erste Zonenart zu umgeben, die jedoch kein jegliches zusätzliches physisches Objekt der Kommunikationsvorrichtung (900a) umgeht.

7. Kommunikationsvorrichtung (900a) nach Anspruch 6, wobei die Kommunikationsvorrichtung (900a) ferner dazu veranlasst wird, in dem Fall, dass ein geschätztes Risiko, dass ein zweites physisches Objekt als eine Gefahr für den Benutzer der Kommunikationsvorrichtung (900a) in einem gewissen geographischen Bereich der physischen Umgebung erscheint, einen ersten Schwellenwert überschreitet, eine dritte Zonenart zu generieren.

8. Kommunikationsvorrichtung (900a) nach Anspruch 7, wobei die Kommunikationsvorrichtung (900a) ferner dazu veranlasst wird, in dem Fall, dass das geschätzte Risiko, dass das zweite physische Objekt als eine Gefahr für den Benutzer der Kommunikationsvorrichtung (900a) in dem geographischen Bereich der physischen Umgebung erscheint, einen zweiten Schwellenwert überschreitet, die dritte Zonenart in eine zweite Zonenart umzuwandeln, die durch eine zweite Zonenart umgangen wird.

9. Kommunikationsvorrichtung (900a) nach einem der Ansprüche 5-8, wobei die Kommunikationsvorrichtung (900a) ferner dazu veranlasst wird, auf Grundlage von mindestens einem der Folgenden zu bestimmen, ob es sich bei einem physischen Objekt um eine potentielle Gefahr für den Benutzer der Kommunikationsvorrichtung (900a) handelt: der Größe des physischen Objekts, der Form des physischen Objekts, der Geschwindigkeit des physischen Objekts, Daten, die von mindestens einem Benutzer einer Kommunikationsvorrichtung aggregiert wurden, bei der es sich nicht um die Kommunikationsvorrichtung (900a) handelt, der Bewegungsbahn der Kommunikationsvorrichtung (900a), mindestens einer physischen Eigenschaft des physischen Objekts und der Bewegungsbahn des physischen Objekts.

10. Kommunikationsvorrichtung (900a) nach Anspruch 9, wobei die Kommunikationsvorrichtung (900a) ferner dazu veranlasst wird, mindestens eine physische Eigenschaft zu berücksichtigen, die mindestens eines der Folgenden umfasst: ein Material, das in dem physischen Objekt umfasst ist, eine Temperatur und eine Dichte.

11. Kommunikationsvorrichtung (900a) nach Anspruch 9 oder 10, wobei die Kommunikationsvorrichtung (900a) ferner dazu veranlasst wird, von mindestens einem Benutzer einer Kommunikationsvorrichtung, bei der es sich nicht um die Kommunikationsvorrichtung (900a) handelt, Daten zu aggregieren, auf Grundlage derer ein physisches Objekt als eine Gefahr oder potentielle Gefahr für den Benutzer der Kommunikationsvorrichtung (900a) angesehen wird.

12. Kommunikationsvorrichtung (900a) nach einem der Ansprüche 2-11, wobei die Kommunikationsvorrichtung (900a) ferner dazu veranlasst wird, die Relevanz einer beliebigen von der Gefahr oder potentiellen Gefahr in Bezug auf die Kommunikationsvorrichtung (900a) auf Grundlage von mindestens einem der Folgenden zu schätzen:

- einer Bewegungsbahn der Kommunikationsvorrichtung (900a);
- einer Bewegungsbahn des physischen Objekts;
- Daten, die dem Benutzer der Kommunikationsvorrichtung (900a) zugeordnet sind, und
- Daten, die mindestens einem Benutzer einer Kommunikationsvorrichtung zugeordnet sind, bei der es sich nicht um die Kommunikationsvorrichtung (900a) handelt.

13. Kommunikationsvorrichtung (900a) nach einem der Ansprüche 2-12, wobei die Kommunikationsvorrichtung (900a) ferner dazu veranlasst wird, mindestens eine von einer Warnung und einer Anweisung darzustellen, die den Benutzer auf das Erscheinen von mindestens einer von der Gefahr und der potentiellen Gefahr hinweist.

14. Kommunikationsvorrichtung (900a) nach Anspruch 13, wobei die Kommunikationsvorrichtung (900a) ferner dazu veranlasst wird, mindestens eine von einer Anweisung und einer Warnung derart zu konfigurieren, dass sie den Benutzer der Kommunikationsvorrichtung (900a) von der Grenze zwischen der zweiten Zone und der ersten Zone weg leitet.

15. Kommunikationsvorrichtung (900a) nach Anspruch 14, wobei die Kommunikationsvorrichtung (900a) ferner dazu veranlasst wird, mindestens eine von einer Warnung oder einer Anweisung in Form von mindestens einem der Folgenden darzustellen:

- akustischen Informationen;
- visuellen Informationen; und
- haptischen Informationen.

16. Kommunikationsvorrichtung (900a) nach einem der Ansprüche 2-15, wobei die Kommunikationsvorrichtung (900a) ferner dazu veranlasst wird, mindestens eine der Zonen außerdem auf Grundlage einer Bewegungsbahn des gefährlichen physischen Objekts dynamisch anzupassen, wenn das gefährliche oder potentielle physische Objekt ein bewegbares Objekt ist.

17. Kommunikationsvorrichtung (900a) nach einem der Ansprüche 2-16, wobei die Kommunikationsvorrichtung (900a) ferner dazu veranlasst wird, mindestens einen Teil der mindestens einen der angepassten Zonen als einen transparenten Teil der dargestellten Entwicklung der virtuellen Aktivität darzustellen.

**Revendications**

1. Procédé permettant d'assister un utilisateur d'un dispositif de communication à éviter un danger potentiel lorsqu'il exécute une activité virtuelle dans un environnement physique, dans lequel le changement du danger potentiel est présenté à l'utilisateur via au moins une interface utilisateur du dispositif de communication, le procédé comprenant :

   - la détermination (4 : 20), sur la base des données de capteur de mouvement en temps réel et historiques du dispositif de communication, d'une trajectoire du dispositif de communication, la trajectoire représentant la direction actuelle du mouvement et du mouvement prédit ;
   - la capture et la consolidation (4 : 30) des données des capteurs associées à l'environnement physique du dispositif de communication et indicatives d'un danger potentiel, et des données virtuelles associées à l'activité virtuelle ;
   - la génération (4 : 60a) d'au moins deux zones mutuellement dépendantes sur la base des données de capteur capturées et consolidées et de la trajectoire du dispositif de communication, et
   - la présentation (4 : 70) d'une scène mise à jour de l'activité virtuelle, comprenant au moins des parties des zones, via au moins une des interfaces utilisateur du dispositif de communication, de telle sorte qu'au moins une partie des deux zones apparaisse progressivement plus transparente dans la présentation, à mesure que l'utilisateur s'approche du danger potentiel, et de telle sorte que la transparence diminue progressivement à mesure que l'utilisateur s'éloigne du danger potentiel.

2. Dispositif de communication (900a) permettant d'assister un utilisateur en lui fournissant des conseils pour éviter un danger potentiel lorsqu'il exécute une activité virtuelle dans un environnement physique, le changement du danger potentiel étant présenté à l'utilisateur via au moins une interface utilisateur du dispositif de communication (900a), le dispositif de communication (900a) comprenant une mémoire (970a) et des instructions lisibles par ordinateur qui, lorsqu'elles sont exécutées par un processeur (960a) du dispositif de communication (900a), amènent le dispositif de communication (900a) à :

   - déterminer, sur la base des données de capteur de mouvement en temps réel et historiques du dispositif de communication, une trajectoire du dispositif de communication (900a), la trajectoire représentant la direction actuelle du mouvement et du mouvement prédit ;
   - capturer et consolider les données des capteurs associées à l'environnement physique du dispositif de communication et indicatives d'un danger potentiel, et les données virtuelles associées à l'activité virtuelle ;
   - générer au moins deux zones mutuellement dépendantes sur la base des données capturées et consolidées du capteur et de la trajectoire du dispositif de communication (900a), et
   - présenter une scène mise à jour de l'activité virtuelle, comprenant au moins des parties des zones via au moins une des interfaces utilisateur du dispositif de communication (900a), de telle sorte qu'au moins une partie des deux zones apparaisse progressivement plus transparente dans la présentation, à mesure que l'utilisateur s'approche du danger potentiel, et de telle sorte que la transparence diminue progressivement à mesure que l'utilisateur s'éloigne du danger potentiel.

3. Dispositif de communication (900a) selon la revendication 2, dans lequel le dispositif de communication (900a) est en outre amené à adapter dynamiquement au moins une des zones sur la base de données capturées et consolidées mises à jour et d'une trajectoire mise à jour du dispositif de communication (900a) et à présenter au moins une partie de l'au moins une des zones via au moins une des interfaces utilisateur du dispositif de communication (900a) pendant l'exécution de l'activité virtuelle.

4. Dispositif de communication (900a) selon la revendication 3, dans lequel le dispositif de communication (900a) est en outre amené à adapter dynamiquement au moins une des zones sur la base également d'au moins une trajectoire d'au moins un utilisateur, autre que l'utilisateur dudit dispositif de communication (900a).

5. Dispositif de communication (900a) selon l'une quelconque des revendications 2 à 4, dans lequel le dispositif de communication (900a) est en outre amené à générer les zones en réponse à la détermination qu'au moins un objet physique de l'environnement physique apparaît comme un danger pour l'utilisateur du dispositif de communication (900a).

6. Dispositif de communication (900a) selon l'une quelconque des revendications 2 à 5, dans lequel le dispositif de communication (900a) est en outre amené à générer des zones comprenant un premier type de zone, adapté pour contourner au moins un premier objet physique de l'environnement physique, qui est considéré comme un danger pour l'utilisateur du premier dispositif de communication, et un second type de zone, adapté pour contourner le premier type de zone, mais qui ne contourne aucun objet physique supplémentaire du dispositif de communication (900a).

7. Dispositif de communication (900a) selon la revendication **6,** dans lequel le dispositif de communication (900a) est en outre amené à générer un troisième type de zone dans le cas où un risque estimé qu'un deuxième objet physique apparaisse comme un danger pour l'utilisateur du dispositif de communication (900a) dans une certaine zone géographique de l'environnement physique dépasse une première valeur seuil.

8. Dispositif de communication (900a) selon la revendication 7, dans lequel le dispositif de communication (900a) est en outre amené à convertir le troisième type de zone en un premier type de zone qui est contourné par un deuxième type de zone dans le cas où le risque estimé que le deuxième objet physique apparaisse comme un danger pour l'utilisateur du dispositif de communication (900a) dans ladite zone géographique de l'environnement physique dépasse une deuxième valeur seuil.

9. Dispositif de communication (900a) selon l'une quelconque des revendications 5 à 8, dans lequel le dispositif de communication (900a) est en outre amené à déterminer si un objet physique constitue un danger potentiel pour l'utilisateur du dispositif de communication (900a) sur la base d'au moins l'un des éléments suivants : la taille de l'objet physique, la forme de l'objet physique, la vitesse de l'objet physique, des données agrégées à partir d'au moins un utilisateur d'un dispositif de communication autre que ledit dispositif de communication (900a), la trajectoire du dispositif de communication (900a), au moins une propriété physique de l'objet physique et la trajectoire de l'objet physique.

10. Dispositif de communication (900a) selon la revendication 9, dans lequel le dispositif de communication (900a) est en outre amené à prendre en compte au moins une propriété physique comprenant au moins l'un des éléments suivants : un matériau compris dans l'objet physique, une température et une densité.

11. Dispositif de communication (900a) selon la revendication 9 ou 10, dans lequel le dispositif de communication (900a) est en outre amené à agréger des données sur la base desquelles un objet physique est considéré comme un danger ou un danger potentiel pour l'utilisateur du dispositif de communication (900a), à partir d'au moins un utilisateur d'un dispositif de communication, autre que ledit dispositif de communication (900a).

12. Dispositif de communication (900a) selon l'une quelconque des revendications 2 à 11, dans lequel le dispositif de communication (900a) est en outre amené à estimer la pertinence de tout danger ou danger potentiel par rapport au dispositif de communication (900a) sur la base d'au moins l'un des éléments suivants :

    - une trajectoire du dispositif de communication (900a) ;
    - une trajectoire de l'objet physique ;
    - des données, associées à l'utilisateur du dispositif de communication (900a), et
    - des données, associées à au moins un utilisateur d'un dispositif de communication, autre que ledit dispositif de communication (900a).

13. Dispositif de communication (900a) selon l'une quelconque des revendications 2 à 12, dans lequel le dispositif de communication (900a) est en outre amené à présenter au moins un avertissement ou une instruction, alertant l'utilisateur de l'apparition d'au moins un parmi un danger et un danger potentiel.

14. Dispositif de communication (900a) selon la revendication 13, dans lequel le dispositif de communication (900a) est en outre amené à configurer au moins une instruction et un avertissement de sorte qu'il dirige l'utilisateur du dispositif de communication (900a) loin de la frontière entre la deuxième zone et la première zone.

15. Dispositif de communication (900a) selon la revendication 14, dans lequel le dispositif de communication (900a) est en outre amené à présenter au moins un avertissement ou une instruction sous la forme d'au moins l'un des éléments suivants :

    - des informations sonores ;
    - des informations visuelles, et
    - des informations haptiques.

16. Dispositif de communication (900a) selon l'une quelconque des revendications 2 à 15, dans lequel lorsque l'objet physique dangereux ou potentiellement dangereux est un objet mobile, le dispositif de communication (900a) est en outre amené à adapter dynamiquement au moins une des zones sur la base également d'une trajectoire de l'objet physique dangereux.

17. Dispositif de communication (900a) selon l'une quelconque des revendications 2 à 16, dans lequel le dispositif de communication (900a) est en outre amené à présenter au moins une partie d'au moins une des zones adaptées comme une partie transparente du développement présenté de l'activité virtuelle.

# Fig. 1

# Fig. 2

WARNING: You are entering a Cycle Path. Please leave the zone

10m to a 700 safe zone in this direction

# Fig. 3

```
              ┌──────────────────┐
              │ Starting virtual │──3:10
              │     activity     │
              └──────────────────┘
                       │
                       ▼
              ┌──────────────────┐
              │   Searching for  │──3:20
              │ environmental data│
              └──────────────────┘
                       │
          3:30         ▼
                  ◇─────────────◇
                 ╱ Environmental ╲      No
                ◇  data available ◇─────────┐
                 ╲       ?        ╱          │
                  ◇─────────────◇           │
                       │ Yes                 │
                       ▼                     │
              ┌──────────────────┐           │
              │     Loading      │──3:40      │
              │ environmental data│           │
              └──────────────────┘           │
                       │                     │
                       ▼                     │
              ┌──────────────────┐           │
      3:50────│Determining normal│           │
              │ location, mapping│           │
              │and object detection?│         │
              └──────────────────┘           │
                       │          3:60        │
                       ▼                     │
                  ◇─────────────◇            │
          No     ╱    New       ╲            │
        ┌────────◇ area or object ◇          │
        │        ╲   detected ?   ╱           │
        │         ◇─────────────◇            │
        │              │ Yes ◄───────────────┤
        │              ▼                      │
        │     ┌──────────────────┐            │
        │3:70─│Determining extended│           │
        │     │ location, mapping │           │
        │     │and object detection│           │
        │     └──────────────────┘            │
        │              │        3:80           │
        │              ▼                       │
        │         ◇─────────────◇             │
        │  Yes   ╱ Environmental  ╲    No       │
        └────────◇  data mapped   ◇────────────┘
                 ╲       ?         ╱
                  ◇─────────────◇
```

# Fig. 4

```
                    ┌─────────────────┐
                    │  Starting virtual│
                    │     activity     │──── 3:10
                    └─────────────────┘
                             │
                             ▼
                    ┌─────────────────┐
          4:20 ─────│  Generating and │
                    │   monitoring a  │
                    │    trajectory   │
                    └─────────────────┘
                             │
                             ▼
                    ┌─────────────────┐
                    │  Capturing and  │
                    │  consolidating  │──── 4:30
                    │   sensor data   │
                    └─────────────────┘
                             │
                             ▼
                    ┌─────────────────┐              ┌──────────────┐
                    │ Consider change │──── 4:40     │ 4:80         │
                    │     of risk     │              │  Updating    │
                    └─────────────────┘              │  trajectory  │
                             │                       └──────────────┘
                             ▼     4:50
                     No    ╱         ╲
              ┌──────────◄ Does zone exist ? ►
              │           ╲         ╱
              │             ╲     ╱
  4:60a       │               Yes
    │         ▼                │
    ▼   ┌───────────┐    ┌──────────────┐
  ┌─────────────┐     │ Adapting relevant│──── 4:60b
  │ Generating  │     │     zones        │
  │relevant zones│    └──────────────────┘
  └─────────────┘             │
         │                    ▼
         └──────────►┌─────────────────┐
                     │ Presenting zones │──── 4:70
                     └─────────────────┘
                             │
              4:90           ▼
                │     ╱             ╲
                ╲   Terminating       ►  No
                  ◄  process  ?    ►─────────
                    ╲             ╱
                      ╲         ╱
                        Yes
                         │
                         ▼
                    ( End )
```

# Fig. 5

5:30a — Determining a desire for zones

5:40a — Considering change of risk

5:50a — New hazard ?
Yes → 5:50b Generate warning

No

5:60a — Known hazard ?
Yes → 2:60b Adapt warning

No → To 4:50

# Fig. 6a

# Fig. 6b

# Fig. 6c

# Fig. 7

# Fig. 8a

110    800    900

# Fig. 8b

110    800

900

# Fig. 9a

# Fig. 9b

**EP 4 268 052 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9501919 B
- US 2019340909 A1
- US 2020143599 A
- US 2015094142 A1
- US 2019043259 A1
- WO 2020203831 A1
- US 2016025982 A1

30